# EUROPÄISCHE PATENTSCHRIFT

(11) **EP 1 727 932 B1**
(45) Veröffentlichungstag und Bekanntmachung des Hinweises auf die Patenterteilung: **13.05.2015**
(21) Anmeldenummer: 05731914.7
(22) Anmeldetag: 09.03.2005
(51) Int. Cl.: F21V 8/00, D06F 39/02, D06F 39/14

(54) **HAUSHALTGERÄT MIT BAUGRUPPE ZUR BEWEGLICHEN LAGERUNG IN EINEM AUFNAHMERAUM DES HAUSHALTGERÄTS, UND WASCHMASCHINE MIT EINER WASCHMITTELEINSPÜLSCHALE**
DOMESTIC APPLIANCE COMPRISING MODULE FOR DISPLACEABLY MOUNTING IN A HOLDING SPACE OF THE DOMESTIC APPLIANCE, AND WASHING MACHINE COMPRISING A DETERGENT DISPENSER
APPAREIL MÉNAGER AVEC UNITÉ STRUCTURALE DESTINÉE À ÊTRE MONTÉE DE MANIERE DÉPLAÇABLE DANS UN COMPARTIMENT DE RÉCEPTION DE L'APPAREIL MÉNAGER, ET MACHINE À LAVER EQUIPÉE D'UN BAC DISTRIBUTEUR DE DÉTERGENT

(30) Priorität: 15.03.2004 DE 102004012542
(43) Veröffentlichungstag der Anmeldung: 06.12.2006
(73) Patentinhaber: BSH Hausgeräte GmbH, 81739 München (DE)
(72) Erfinder: MAYER, Herbert, 93077 Bad Abbach (DE); VETTER, Roland, 89537 Giengen-Sachsenhausen (DE)
(86) Internationale Anmeldenummer: PCT/EP2005/051065
(87) Internationale Veröffentlichungsnummer: WO 2005/090668

(56) Entgegenhaltungen:
- EP-A- 1 511 050
- DE-A1- 1 690 329
- FR-A- 1 534 418
- GB-A- 2 128 640
- US-A- 3 144 643

## Beschreibung

Die vorliegende Erfindung betrifft eine Baugruppe zur beweglichen Lagerung in einem Aufnahmeraum eines Haushaltgeräts durch eine Aufnahmeöffnung hindurch bzw. hinein.

Eine derartige Baugruppe ist aus DE 101 41 634 A1 bekannt, welches den Oberbegriff des Anspruchs 1 offenbart. Dort ist ein Haushaltgerät, insbesondere eine Waschmaschine, beschrieben, mit einer in einem Aufnahmeraum eines Haushaltgeräts durch eine Aufnahmeöffnung hindurch bzw. hinein beweglich gelagerten Baugruppe, wie einem Bullauge oder einer frontseitig herausziehbaren Waschmitteleinspülschale. Das Bullauge bzw. der Schalengriff der Waschmitteleinspülschale weist ein Markenzeichen auf, wobei zur besseren Sichtbarkeit das Markenzeichen eine räumliche Ausdehnung aufweist. Eine Waschmaschine gem. dem Oberbegriff des Anspruchs 9 ist aus GB 2 128 640 A bekannt.

Der vorliegenden Erfindung, welche nur in den Ansprüchen definiert ist, liegt die Aufgabe zugrunde, eine Baugruppe zur beweglichen Lagerung in einem Aufnahmeraum eines Haushaltgeräts durch eine Aufnahmeöffnung hindurch bzw. hinein mit einer einfachen, kostengünstigen optischen Anzeige auszustatten.

Diese Aufgabe wird durch eine Baugruppe mit den Merkmalen von Anspruch 1 gelöst.

Die Baugruppe weist zumindest ein erstes passives Anzeigeelement auf. Das erste passive Anzeigeelement ist zur Lichtversorgung in zumindest einer ersten Bewegungsposition der Baugruppe für eine optische Kopplung an zumindest eine im Aufnahmeraum angebrachte Lichtquelle ausgebildet. Da die Lichtquelle außerhalb der Baugruppe angeordnet ist und das Licht von der Lichtquelle in das erste passive Anzeigeelement eingekoppelt wird, kann an der beweglich gelagerten Baugruppe eine optische Anzeige verwirklicht werden, ohne dass es notwendig ist, die Baugruppe mit einer elektrischen Stromzuführung auszustatten. Somit ist es auf einfach Weise möglich, beispielsweise Markenzeichen auch an beweglichen Baugruppen zu hinterleuchten. Insbesondere für ein Haushaltgerät mit in einem Aufnahmeraum durch eine Aufnahmeöffnung hindurch bzw. hinein beweglich gelagerter Baugruppe, wie beispielsweise ein Schubladenelement oder eine Tür oder eine Haube oder eine Klappe des Haushaltgeräts, kann dadurch an solch einer beweglichen Baugruppe eine einfache und kostengünstige optische Anzeige realisiert werden.

In einer bevorzugten Ausführungsform weist die Baugruppe ein zweites passives Anzeigeelement auf, das zur Lichtversorgung in zumindest einer von der ersten verschiedenen zweiten Bewegungsposition der Baugruppe für eine optische Kopplung an die Lichtquelle ausgebildet ist. Insbesondere weist das zweite passive Anzeigeelement eine von dem ersten Anzeigeelement unterscheidbare Anzeige auf. Auf diese Weise können an verschiedenen Positionen der beweglichen Baugruppe optische Anzeigen realisiert sein, die jeweils spezifisch für eine bestimmte Bewegungsposition der Baugruppe mit Licht versorgt und somit für einen Benutzer sichtbar werden.

Bevorzugt weisen das erste passive Anzeigeelement und/oder das zweite passive Anzeigeelement zumindest einen Lichtleiter zur Kopplung an die Lichtquelle auf. Dadurch kann Licht, welches von der Lichtquelle abgestrahlt wird, auf einfache Weise und mit lediglich geringen Lichtverlusten bis zu der optischen Anzeige geleitet werden.

Vorteilhafterweise ist das erste passive Anzeigeelement und/oder das zweite passive Anzeigeelement an der Baugruppe angeformt. Beispielsweise kann die Baugruppe mit den entsprechenden Anzeigeelementen in einem Spritzgussverfahren, insbesondere einem Zwei-Komponenten-Spritzgussverfahren, aus Kunststoff gefertigt werden.

Gemäß einer bevorzugten Ausführungsform ist das erste passive Anzeigeelement und/oder das zweite passive Anzeigeelement lösbar an der beweglich gelagerten Baugruppe befestigt. Insbesondere ist das erste passive Anzeigeelement und/oder das zweite passive Anzeigeelement ein Leuchtmodul mit einem Gehäuse. Beispielsweise können an der Außenseite des Gehäuses Rastelemente angeformt sein, mit dem das Leuchtmodul in einer Modulaufnahme des Haushaltgerätes befestigt werden kann. Auf diese Weise kann die Verbindung zwischen dem Leuchtmodul und der Modulaufnahme leicht wieder gelöst und das Leuchtmodul aus der Modulaufnahme entnommen werden, um es beispielsweise gegen ein anderes auszutauschen oder um einzelne Komponenten des Leuchtmoduls auszutauschen. Beispielsweise unterscheiden sich die Leuchtmodule bzw. eine austauschbare Komponente des Leuchtmoduls durch verschieden ausgebildete Lichtaustrittsseiten, die verschiedene Symbole oder Schriftzeichen aufweisen, die in die Lichtaustrittsseite geformt, an der Lichtaustrittsseite angeformt oder auf die Lichtaustrittsseite aufgedruckt sein können.

Insbesondere ist das Haushaltgerät eine Waschmaschine und die beweglich gelagerte Baugruppe eine Waschmitteleinspülschale. Die Waschmitteleinspülschale weist an ihrer Griffplatte das erste passive Anzeigeelement mit beispielsweise einem Markenzeichen auf, dass bei geschlossener Waschmitteleinspülschale beleuchtet werden kann. An ihrer Rückseite weist die Waschmitteleinspülschale das zweite passive Anzeigeelement mit für verschiedene Kammern der Waschmitteleinspülschale zugeordneten Symbolen auf, das bei ausgezogener Waschmitteleinspülschale beleuchtet werden kann.

Die Erfindung und ihre Weiterbildungen werden nachfolgend anhand von Zeichnungen näher erläutert:

Es zeigen
Fig. 1a eine perspektivische Ansicht eines Leuchtmoduls ohne Leuchtelement schräg auf die Lichtaustrittsfläche;
Fig. 1b, 1c je einen vergrößerten Ausschnitt des Leuchtmoduls aus Fig. 1a;
Fig. 2a das Leuchtmodul aus Fig. 1a mit einem zweiten Lichtleiter als Leuchtelement;
Fig. 2b den zweiten Lichtleiter gemäß Fig. 2a;
Fig. 3a eine perspektivische Ansicht der Rückseite einer Blende eines erfindungsgemäßen Haushaltgerätes mit dem montierten Leuchtmodul gemäß Fig. 2a schräg von der Rückseite des Leuchtmoduls;
Fig. 3b eine frontseitige Ansicht der Blende gemäß Fig. 3a;
Fig. 4a eine frontseitige Ansicht eines erfindungsgemäßen Haushaltgerätes mit einem montierten Leuchtmodul gemäß Fig. 2a;
Fig. 4b, 4c je eine perspektivische Ansicht einer erfindungsgemäßen Waschmitteleinspülschale des Haushaltgerätes gemäß Fig. 4a schräg von oben.

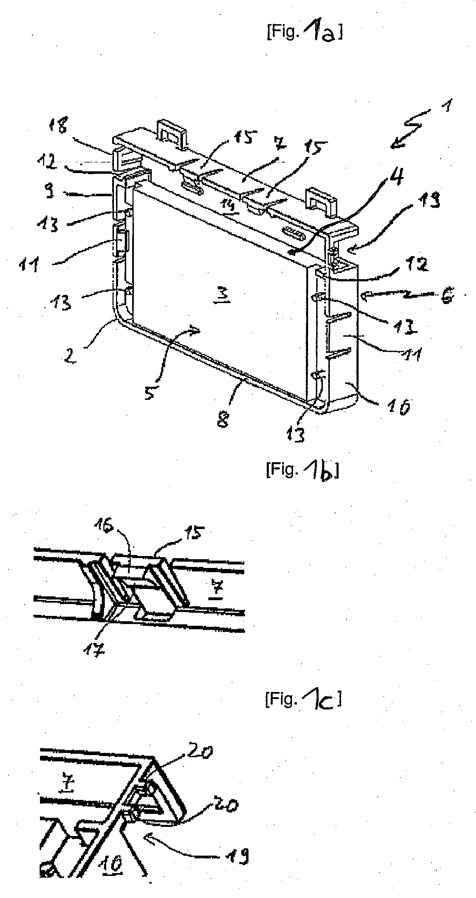

In Figur 1a ist ein Leuchtmodul 1 mit einem Gehäuse 2 und mit einem in dem Gehäuse 2 angeordneten ersten Lichtleiter 3 gezeigt, das als erstes oder zweites passives Anzeigeelement an oder in einer erfindungsgemäßen Baugruppe angeordnet werden kann. Der erste Lichtleiter 3 ist quaderförmig ausgestaltet und weist eine Lichteintrittsfläche 4 und eine Lichtaustrittsfläche 5 auf, wobei die Lichtaustrittsfläche 5 im wesentlichen senkrecht auf der Lichteintrittsfläche 4 steht. Das Gehäuse 2 umfasst den ersten Lichtleiter 3 mit einer der Lichtaustrittsfläche 5 des ersten Lichtleiters 3 gegenüberliegenden Rückwand 6, mit einer der Lichteintrittsfläche 4 benachbart angeordneten ersten Längswand 7, mit einer dieser ersten Längswand 7 gegenüberliegenden zweiten Längswand 8, mit einer die erste Längswand 7 und die zweite Längswand 8 verbindenden ersten Querwand 9 und mit einer der ersten Querwand 9 gegenüberliegenden zweiten Querwand 10. An der Lichtaustrittsfläche 5 des ersten Lichtleiters 3 ist das Gehäuse 2 offen ausgebildet. Die Innenseiten des Gehäuses 2, insbesondere die der Rückwand 6 und der zweiten Längswand 8, können lichtreflektierend ausgebildet sein.

An der ersten Querwand 9 und an der gegenüberliegenden zweiten Querwand 10 sind Rastelemente 11 angeformt, mit denen der erste Lichtleiter 3 in dem Gehäuse 2 gehalten wird. Des weiteren sind zur exakten Positionierung des ersten Lichtleiters 3 in dem Gehäuse 2 an der ersten bzw. der zweiten Querwand 9, 10 Führungselemente 12 angeformt und die Rückwand 6 weist angeformte Stifte 13 auf, die durch Aussparungen des ersten Lichtleiters 3 greifen und auf diese Weise die exakte Position des ersten Lichtleiters 3 bestimmen. Die Rastelemente 11, die Führungselemente 12 und die Stifte 13 sind insbesondere einstückig an dem Gehäuse 2 angeformt.

Innerhalb des Gehäuses 2 ist zwischen der Lichteintrittsfläche 4 des ersten Lichtleiters 3 und der benachbart angeordneten ersten Längswand 7 des Gehäuses 2 ein Aufnahmebereich 14 zur Aufnahme eines Leuchtelements ausgebildet, welches das Leuchtmodul 1 mit Licht versorgen kann. An der ersten Längswand 7 des Gehäuses 2 sind zwei Rastelemente 15 zur Halterung des Leuchtelements angeformt. Eine vergrößerte Darstellung des Rastelements 15 ist in Figur 1b gezeigt. Das Rastelement 15 ist federnd an dem Gehäuse 2 angeformt und weist eine Rastnase 16 auf, die mit einer bogenförmigen Kehle 17 ausgebildet ist. Des weiteren ist an der ersten Querwand 9 des Gehäuses 2 eine federnde Halterung 18 angeformt, die bei einer Montage des Leuchtelements aus ihrer Ruhelage gebogen werden kann. Weiterhin weist das Gehäuse 2 an seiner zweiten Querwand 10 eine Aussparung 19 auf, durch die das Leuchtelement bei der Montage in den Aufnahmebereich 14 gefädelt werden kann. In Figur 1c ist eine vergrößerte Darstellung der zweiten Querwand 10 mit der Aussparung 19 gezeigt. An der Außenseite der zweiten Querwand 10 sind oberhalb der Aussparung 19 zwei Halteelemente 20 angeformt, mit denen bei der Montage des Leuchtelements in dem Leuchtmodul 1 eine genaue Position des Leuchtelements in dem Aufnahmebereich 14 festgelegt werden kann.

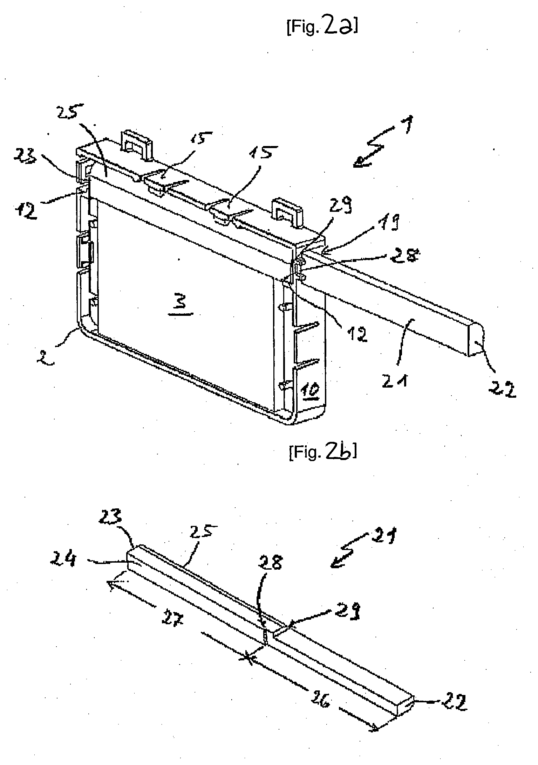

In Figur 2a ist das Leuchtmodul 1 gemäß Figur 1a mit einem in dem Aufnahmebereich 14 montierten zweiten Lichtleiter 21 und in Figur 2b ist der zweite Lichtleiter 21 gezeigt. Der zweite Lichtleiter 21 ist stabförmig ausgebildet und weist eine Lichteinkoppelfläche 22, eine der Lichteinkoppelfläche 22 gegenüberliegende Endfläche 23 und eine im rechten Winkel zur Lichteinkoppelfläche 22 bzw. Endfläche 23 angeordnete Lichtauskoppelfläche 24 auf. Die der Lichtauskoppelfläche 24 gegenüberliegende rückseitige Fläche 25 des zweiten Lichtleiters 21 ist gewölbt ausgebildet. Des weiteren ist der zweite Lichtleiter 21 in einen Lichtzuführbereich 26 und einen Lichtabgabebereich 27 unterteilt, wobei der zweite Lichtleiter 21 zwischen diesen beiden Bereichen 26, 27 anschließend an die Lichtauskoppelfläche 24 eine erste Stufe 28 und senkrecht dazu eine zweite Stufe 29 aufweist, durch die der zweite Lichtleiter 21 in dem Aufnahmebereich 14 des Gehäuses 2 gehalten werden kann. Der zweite Lichtleiter 21 kann mit Ausnahme der Lichteinkoppelfläche 22 und der L ichtauskoppelfläche 24 mit einer lichtreflektierenden und/oder lichtundurchlässigen Schicht überzogen sein, damit Licht, das von einer Lichtquelle (nicht gezeigt) in die Lichteinkoppelfläche 22 des zweiten Lichtleiters 21 eintritt nur aus der Lichtauskoppelfläche 24 wieder austreten kann.

Bei der Montage des zweiten Lichtleiters in den Aufnahmebereich 14 des Leuchtmoduls 1 gemäß Figur 1a und Figur 2a, wird der zweite Lichtleiter 21 mit seinem Lichtzuführbereich 27 durch die Aussparung 19 des Gehäuses 2 gefädelt, so dass der Lichtzuführbereich 27 seitwärts aus dem Gehäuse 2 ragt. Die Rastelemente 15 werden aus ihrer Ruhelage gebogen und der zweite Lichtleiter 21 derart in den Aufnahmebereich 14 hineingedrückt, dass die Lichtauskoppelfläche 24 in direkten Kontakt mit der Lichteintrittsfläche 4 des ersten Lichtleiters 3 zu liegen kommt. Bei montiertem zweiten Lichtleiter umschließen die Rastelemente 15 jeweils mit der bogenförmigen Kehle 17 ihrer Rastnasen 16 formschlüssig die gewölbte rückseitige Fläche 25 des zweiten Lichtleiters 21. Der zweite Lichtleiter 21 liegt mit seiner Endfläche 23 und seiner ersten Stufe 28 an den Führungselementen 12 des Gehäuses 2 und mit seiner zweiten Stufe 29 an der zweiten Querwand 10 oberhalb der Aussparung 19 an und ist auf diese Weise in dem Aufnahmebereich 14 des Gehäuses 2 fixiert.

Der zweite Lichtleiter 21 kann ein eigenes Gehäuse aufweisen und beispielsweise als Zweikomponenten-Spritzgussteil gefertigt sein. Des weiteren kann der zweite Lichtleiter 21 aus mehreren zweiten Einzellichtleitern zusammengesetzt sein, die beispielsweise durch ein gemeinsames Gehäuse zusammengehalten oder einzeln in den Aufnahmebereich 14 des Leuchtmoduls 1 eingefügt und dort gehalten werden. Die zweiten Einzellichtleiter können verschiedenen Lichtquellen zugeordnet sein, die Licht zu verschiedenen Zeitpunkten und/oder in verschiedenen Farben abstrahlen können, oder die zweiten Einzellichtleiter können bei Lichtquellen gleicher Lichtfärbung unterschiedlich eingefärbt sein. Des weiteren kann auch der erste Lichtleiter 3 in dem Gehäuse 2 aus mehreren ersten Einzellichtleitem zusammengesetzt sein, die mit ihren Lichtaustrittsflächen 5 nebeneinander oder hintereinander angeordnet sind, wobei die ersten Einzellichtleiter unterschiedliche Symbole und/oder Schriftzeichen und/oder Farben aufweisen können. Somit ist es möglich, jedem der ersten Einzellichtleiter einen zweiten Einzellichtleiter zuzuordnen, wodurch jeder der ersten Einzellichtleiter separat mit Licht versorgt werden kann. Um eine über die gesamte Lichtaustrittsfläche 5 gleichmäßig verteilte Lichtabstrahlung zu erzielen, kann über der Lichtaustrittsfläche 5 des ersten Lichtleiters 3 eine Diffusorfolie (nicht gezeigt) angebracht sein, die durch die Stifte 13 fixiert ist. Alternativ dazu kann der erste Lichtleiter 3 aus Material gefertigt sein, welches eingetretenes Licht diffus streut.

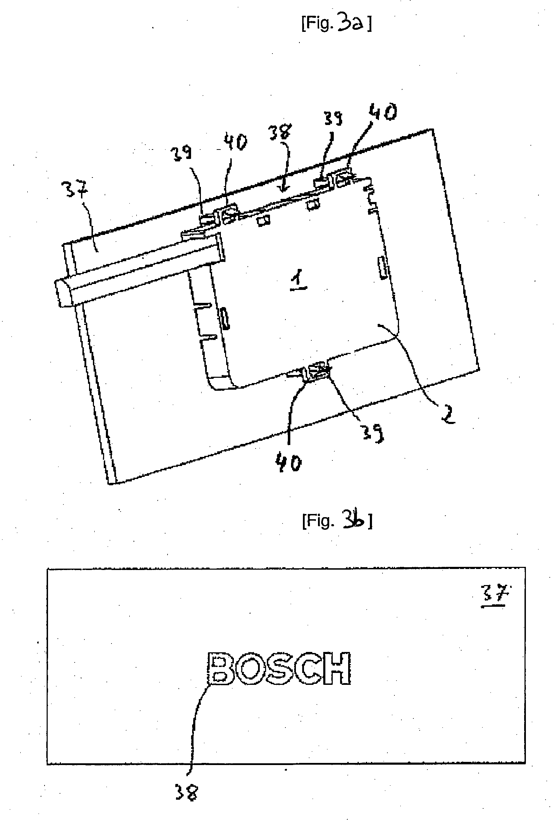

In Figur 3a ist eine perspektivische Ansicht einer Blende 37 eines Haushaltgerätes mit dem montierten Leuchtmodul 1 gemäß Fig. 2a schräg von der Rückseite des Leuchtmoduls 1 gezeigt. An der Rückseite der Blende 37 ist eine Modulaufnahme 38 durch drei an der Blende 37 angeformte Rasthaken 39 gebildet. Die Rasthaken 39 greifen durch Rastösen 40, die an dem Gehäuse 2 des Leuchtmoduls 1 angeformt sind, wodurch das Leuchtmodul 1 einerseits in der Modulaufnahme 38 gehalten wird und andererseits leicht aus der Modulaufnahme 38 wieder gelöst werden kann.

In Figur 3b ist eine frontseitige Ansicht der Blende 37 gemäß Fig. 3a gezeigt. Die Blende 37 weist Aussparungen 38 in Form eines Schriftzugs auf, durch die Licht des Leuchtmoduls 1 abgestrahlt werden kann. Die Aussparungen 38 können mit lichtdurchlässigem Material ausgefüllt sein oder alternativ kann der Schriftzug kongruent zu den Aussparungen 38 auf der Lichtaustrittsfläche 5 des ersten Lichtleiters 3 erhaben ausgebildet sein, so dass bei in der Modulaufnahme 38 montiertem Leuchtmodul 1 der erhaben ausgebildete Schriftzug die Aussparungen 38 der Blende 37 durchdringt und mit der Blende 37 eine plane Frontfläche bildet.

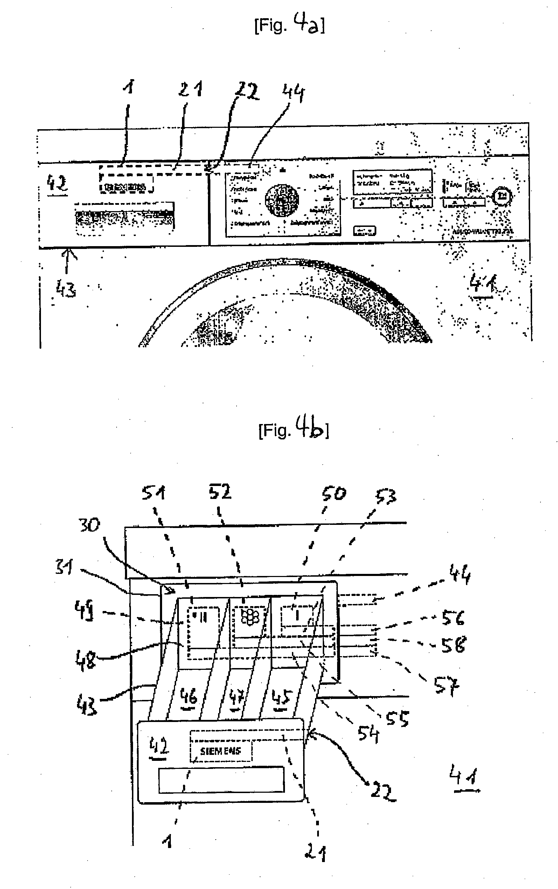

In Figur 4a ist die obere Frontansicht einer erfindungsgemäßen Waschmaschine 41 gezeigt mit einer Griffplatte 42 einer erfindungsgemäßen Waschmitteleinspülschale 43, hinter der als erste passives Anzeigeelement das Leuchtmodul 1 gemäß Figur 2a montiert ist. Alternativ kann das erste passive Anzeigeelement auch an der Waschmitteleinspülschale 43 angeformt sein. Die Position des Leuchtmoduls 1 mit dem zweiten Lichtleiter 21 ist gestrichelt angedeutet. Die Waschmitteleinspülschale 43 ist in einem Aufnahmeraum 30 der Waschmaschine 41 derart beweglich gelagert, dass sie durch eine Aufnahmeöffnung 31 hindurch ausgezogen bzw. eingeschoben werden kann. Der zweite Lichtleiter 21 ist bei geschlossener Waschmitteleinspülschale 43 mit seiner Lichteinkoppelfläche 22 an eine in dem Aufnahmeraum 30 nahe der Aufnahmeöffnung 31 angeordnete Lichtquelle 44 der Waschmaschine 41 angekoppelt, so dass das Leuchtmodul 1 mit Licht versorgt wird und das Markenzeichen "SIEMENS" auf der Griffplatte 42 der Waschmitteleinspülschale 43 aufleuchten kann.

In Figur 4b ist schematisch die Waschmitteleinspülschale 43 in ausgezogenem Zustand gezeigt, so dass eine erste Kammer 45 zur Aufnahme von Waschmittel für die Vorwäsche, eine zweite Kammer 46 zur Aufnahme von Waschmittel für die Hauptwäsche und eine dritte Kammer 47 zur Aufnahme von Weichspüler sichtbar sind. Die Rückwand 48 der Waschmitteleinspülschale 43 weist ein zweites passives Anzeigeelement 49 auf. Das zweite passive Anzeigeelement 49 weist einen ersten Lichtleiter 3 auf, der aus einem ersten Lichtabstrahlelement 50 für die erste Kammer 45, einem zweiten Lichtabstrahlelement 51 für die zweite Kammer 46 und einem dritten Lichtabstrahlelement 52 für die dritte Kammer 47 besteht, die nebeneinander in dem zweiten passiven Anzeigeelement 49 angeordnet sind. Das zweite passive Anzeigeelement 49 weist einen zweiten Lichtleiter 21 auf, der aus einem ersten Lichtleitelement 53 zur Lichtversorgung des ersten Lichtabstrahlelements 50, einem zweiten Lichtleitelement 54 zur Lichtversorgung des zweiten Lichtabstrahlelements 51 und einem dritten Lichtleitelement 55 zur Lichtversorgung des dritten Lich tabstrahlelements 52 besteht. Die Positionen des ersten, zweiten und dritten Lichtabstrahlelements 50, 51 und 52 mit den ersten, zweiten und dritten Lichtleitelementen 53, 54 und 55 sind in Figur 4b gestrichelt angedeutet.

Die Rückwand 48 der Waschmitteleinspülschale 43 weist für die erste Kammer 45 eine Aussparung in Form eines Symbols für Vorwäsche "I", für die zweite Kammer 46 eine Aussparung in Form eines Symbols für Hauptwäsche "II" und für die dritte Kammer 47 eine Aussparung in Form eines Symbols für Weichspülen "*" auf, durch die Licht des zweiten passiven Anzeigeelements 49 abgestrahlt werden kann. Bei vollständig geöffneter Waschmitteleinspülschale 43 koppelt das erste Lichtleitelement 53 an eine erste Lichtquelle 56, das zweite Lichtleitelement 54 an eine zweite Lichtquelle 57 und das dritte Lichtleitelement 55 an eine dritte Lichtquelle 58, so dass das erste, zweite und dritte Lichtabstrahlelement 50, 51 und 52 unabhängig voneinander mit Licht versorgt werden können. Die erste, zweite und dritte Lichtquelle 56, 57 und 58 können beispielsweise verschieden farbige Leuchtdioden, Glühlampen oder wiederum Lichtleiter sein, die Licht von einer entfernt angeordneten Lichtquelle übertragen. Je nach eingestelltem Waschprogramm können die erste, zweite und dritte Lichtquelle 56, 57, 58 von einer Waschmaschinensteuerung (nicht gezeigt) vor dem Start des Waschprogramms bei vollständig geöffneter Waschmitteleinspülschale 43 unabhängig voneinander eingeschaltet werden. Auf diese Weise leuchtet das Symbol für Vorwäsche "I" an der Rückwand 48 der Waschmitteleinspülschale 43 nur dann auf, wenn ein Waschprogramm mit Vorwäsche gewählt ist, so dass einem Benutzer angezeigt wird, ob die erste Kammer 45 mit Waschmittel gefüllt werden muss oder nicht.

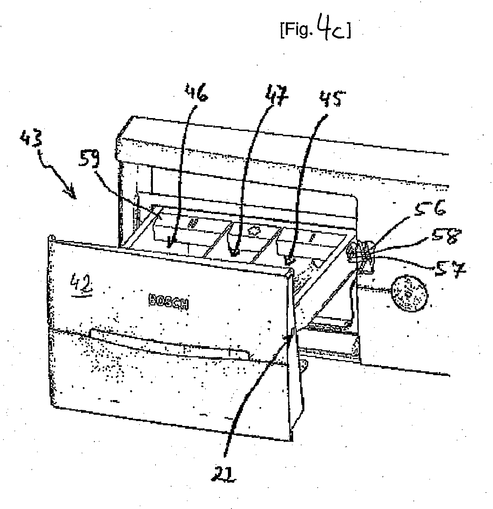

In Figur 4c ist eine alternative Ausführung der Waschmitteleinspülschale 43 gezeigt. Von dem ersten passiven Anzeigeelement 1 der Griffplatte 42 der Waschmitteleinspülschale 43 ist seitlich an der Waschmitteleinspülschale 43 die Lichteinkoppelfläche 22 gezeigt, in die bei geschlossenen Waschmitteleinspülschale 43 Licht von der ersten, zweiten und dritten Lichtquelle 56, 57 und 58 einkoppeln kann. Am hinteren, oberen Ende der Waschmitteleinspülschale 43 ist vor der Rückwand 48 eine zur Front der Waschmaschine 41 leicht geneigte Blende 59 ausgebildet. Diese zu einem Betrachter geneigte Blende weist das zweite passive Anzeigeelement 49 auf, mit einer Anzeige in Form des Symbols für Vorwäsche "I" für die erste Kammer 45, mit einer Anzeige in Form des Symbols für Hauptwäsche "II" für die zweite Kammer 46 und mit einer Anzeige in Form des Symbols für Weichspülen "*"für die dritte Kammer 47. Bei geöffneter Waschmitteleinspülschale 43 wird das Licht der Symbole in Richtung auf einen vor der Waschmaschine 41 stehenden Betrachter abgestrahlt, so dass die Symbole für den Benutzer gut sichtbar sind.

Die Waschmitteleinspülschale 43 kann auch nur mit dem ersten passiven Anzeigeelement 1 oder dem zweiten passiven Anzeigeelement 49 ausgebildet sein. Anstatt an der Waschmitteleinspülschale 43 kann das erste passive Anzeigeelement 1 oder das zweite passive Anzeigeelement 49 an einem Griff des Bullauges angeordnet sein.

### Bezugszeichenliste

- 1: Leuchtmodul; erstes passives Anzeigeelement
- 2: Gehäuse
- 3: Erster Lichtleiter
- 4: Lichteintrittsfläche
- 5: Lichtaustrittsfläche
- 6: Rückwand des Gehäuses
- 7: Erste Längswand des Gehäuses
- 8: Zweite Längswand des Gehäuses
- 9: Erste Querwand des Gehäuses
- 10: Zweite Querwand des Gehäuses
- 11: Rastelement
- 12: Führungselement
- 13: Stift
- 14: Aufnahmebereich für ein Leuchtelement
- 15: Rastelement
- 16: Rastnase
- 17: Bogenförmige Kehle der Rastnase
- 18: Federnde Halterung
- 19: Aussparung
- 20: Halteelement
- 21: Zweiter Lichtleiter
- 22: Lichteinkoppelfläche
- 23: Endfläche
- 24: Lichtauskoppelfläche
- 25: Rückseitige Fläche des zweiten Lichtleiters
- 26: Lichtzuführbereich
- 27: Lichtabgabebereich
- 28: Erste Stufe
- 29: Zweite Stufe
- 30: Aufnahmeraum
- 31: Aufnahmeöffnung
- 37: Blende
- 38: Modulaufnahme
- 39: Rasthaken
- 40: Rastöse
- 41: Waschmaschine
- 42: Griffplatte
- 43: Waschmitteleinspülschale
- 44: Lichtquelle
- 45: Erste Kammer
- 46: Zweite Kammer
- 47: Dritte Kammer
- 48: Rückwand der Waschmitteleinspülschale
- 49: Zweites passives Anzeigeelement
- 50: Erstes Lichtabstrahlelement
- 51: Zweites Lichtabstrahlelement
- 52: Drittes Lichtabstrahlelement
- 53: Erstes Lichtleitelement
- 54: Zweites Lichtleitelement
- 55: Drittes Lichtleitelement
- 56: Erste Lichtquelle
- 57: Zweite Lichtquelle
- 58: Dritte Lichtquelle
- 59: Geneigte Blende

## Patentansprüche

1. Haushaltgerät (41) mit Baugruppe zur beweglichen Lagerung in einem Aufnahmeraum (30) des Haushaltgeräts (41) durch eine Aufnahmeöffnung (31) hindurch bzw. hinein, wobei die Baugruppe (43) ein Schubladenelement oder eine Tür oder eine Haube oder eine Klappe des Haushaltgeräts (41) ist, **dadurch gekennzeichnet, dass** die Baugruppe (43) zumindest ein erstes passives Anzeigeelement (1) aufweist, das derart ausgebildet ist, dass es in zumindest einer ersten Bewegungsposition der im Aufnahmeraum (30) gelagerten Baugruppe (43) zur Lichtversorgung optisch an eine im Aufnahmeraum (30) angebrachte Lichtquelle (44, 56, 57, 58) angekoppelt ist, und dass die Baugruppe (43) ein zweites passives Anzeigeelement (49) aufweist, das derart ausgebildet ist, dass es in zumindest einer von der ersten verschiedenen zweiten Bewegungsposition der im Aufnahmeraum (30) gelagerten Baugruppe (43) zur Lichtversorgung optisch an die Lichtquelle (44, 56, 57, 58) angekoppelt ist.

2. Haushaltgerät (41) nach Anspruch 1, **dadurch gekennzeichnet, dass** das zweite passive Anzeigeelement (49) eine von dem ersten Anzeigeelement (1) unterscheidbare Anzeige aufweist.

3. Haushaltgerät (41) nach Anspruch 1 oder 2, **dadurch gekennzeichnet, dass** das erste passive Anzeigeelement (1) und/oder das zweite passive Anzeigeelement (49) zumindest einen Lichtleiter (21, 53, 54, 55) zur Kopplung an die Lichtquelle (44, 56, 57, 58) aufweist.

4. Haushaltgerät (41) nach Anspruch 1 bis 3, **dadurch gekennzeichnet, dass** das erste passive Anzeigeelement (1) und/oder das zweite passive Anzeigeelement (49) an der Baugruppe (43) angeformt ist.

5. Haushaltgerät (41) nach Anspruch 1 bis 3, **dadurch gekennzeichnet, dass** das erste passive Anzeigeelement (1) und/oder das zweite passive Anzeigeelement (49) lösbar an der beweglich gelagerten Baugruppe (43) befestigt ist.

6. Haushaltgerät (41) nach Anspruch 5, **dadurch gekennzeichnet, dass** das erste passive Anzeigeelement (1) und/oder das zweite passive Anzeigeelement (49) ein Leuchtmodul mit einem Gehäuse (2) ist.

7. Haushaltgerät (41) nach Anspruch (6), **dadurch gekennzeichnet, dass** das Haushaltgerät (41) eine Waschmaschine ist.

8. Haushaltgerät (41) nach Anspruch 7, **dadurch gekennzeichnet, dass** die beweglich gelagerte Baugruppe (43) eine Waschmitteleinspülschale ist.

9. Waschmaschine (41) mit einer Waschmitteleinspülschale (43) zur beweglichen Lagerung in einem Aufnahmeraum (30) der Waschmaschine (41) durch eine Aufnahmeöffnung (31) hindurch bzw. hinein, **dadurch gekennzeichnet, dass** die Waschmitteleinspülschale (43) zumindest ein erstes passives Anzeigeelement (1) aufweist, das derart ausgebildet ist, dass es in zumindest einer ersten Bewegungsposition der im Aufnahmeraum (30) gelagerten Waschmitteleinspülschale (43) zur Lichtversorgung optisch an eine im Aufnahmeraum (30) angebrachte Lichtquelle (44, 56, 57, 58) angekoppelt ist.

10. Waschmaschine (41) nach Anspruch 9, **dadurch gekennzeichnet, dass** die Waschmitteleinspülschale (43) ein zweites passives Anzeigeelement (49) aufweist, das derart ausgebildet ist, dass es bei im Aufnahmeraum (30) gelagerter Waschmitteleinspülschale (43) in zumindest einer von der ersten verschiedenen zweiten Bewegungsposition der Waschmitteleinspülschale (43) zur Lichtversorgung optisch an die Lichtquelle (44, 56, 57, 58) angekoppelt ist.

11. Waschmaschine (41) nach Anspruch 10, **dadurch gekennzeichnet, dass** das zweite passive Anzeigeelement (49) eine von dem ersten Anzeigeelement (1) unterscheidbare Anzeige aufweist.

12. Waschmaschine (41) nach Anspruch 9 bis 11, **dadurch gekennzeichnet, dass** das erste passive Anzeigeelement (1) und/oder das zweite passive Anzeigeelement (49) zumindest einen Lichtleiter (21, 53, 54, 55) zur Kopplung an die Lichtquelle (44, 56, 57, 58) aufweist.

13. Waschmaschine (41) nach Anspruch 9 bis 12, **dadurch gekennzeichnet, dass** das erste passive Anzeigeelement (1) und/oder das zweite passive Anzeigeelement (49) an der Waschmitteleinspülschale (43) angeformt ist.

14. Waschmaschine (41) nach Anspruch 9 bis 12, **dadurch gekennzeichnet, dass** das erste passive Anzeigeelement (1) und/oder das zweite passive Anzeigeelement (49) lösbar an der beweglich gelagerten Waschmitteleinspülschale (43) befestigt ist.

15. Waschmaschine (41) nach Anspruch 14, **dadurch gekennzeichnet, dass** das erste passive Anzeigeelement (1) und/oder das zweite passive Anzeigeelement (49) ein Leuchtmodul mit einem Gehäuse (2) ist.

## Claims

1. Domestic appliance (41) with module for displaceably mounting in a holding space (30) of the domestic appliance (41) through or into a holding aperture (31), wherein the module (43) is a drawer element or a door or a cover or a flap of the domestic appliance (41), **characterised in that** the module (43) has at least one first passive display element (1) that is embodied such that in order to provide light it is coupled optically, in at least one first displacement position of the module (43) mounted in the holding space (30), to a light source (44, 56, 57, 58) arranged in the holding space (30), and that the module (43) has a second passive display element (49) that is embodied such that in order to provide light it is coupled optically, in at least one second displacement position that differs from the first displacement position of the module (43) mounted in the holding space (30), to the light source (44, 56, 57, 58).

2. Domestic appliance (41) according to claim 1, **characterised in that** the second passive display element (49) has a display that can be distinguished from the first display element (1).

3. Domestic appliance (41) according to claim 1 or 2, **characterised in that** the first passive display element (1) and/or the second passive display element (49) has at least one optical fibre (21, 53, 54, 55) for coupling to the light source (44, 56, 57, 58).

4. Domestic appliance (41) according to claim 1 to 3, **characterised in that** the first passive display element (1) and/or the second passive display element (49) is moulded onto the module (43).

5. Domestic appliance (41) according to claim 1 to 3, **characterised in that** the first passive display element (1) and/or the second passive display element (49) is removably fixed onto the displaceably-mounted module (43).

6. Domestic appliance (41) according to claim 5, **characterised in that** the first passive display element (1) and/or the second passive display element (49) is a light module with a housing (2).

7. Domestic appliance (41) according to claim 6, **characterised in that** the domestic appliance (41) is a washing machine.

8. Domestic appliance (41) according to claim 7, **characterised in that** the displaceably-mounted module (43) is a detergent dispenser.

9. Washing machine (41) with a detergent dispenser (43) for displaceably mounting in a holding space (30) of the washing machine (41) through or into a holding aperture (31), **characterised in that** the detergent dispenser (43) has at least one first passive display element (1) that is embodied such that in order to provide light it is coupled optically, in at least one first displacement position of the detergent dispenser (43) mounted in the holding space (30), to a light source (44, 56, 57, 58) arranged in the holding space (30).

10. Washing machine (41) according to claim 9, **characterised in that** the detergent dispenser (43) has a second passive display element (49) that is embodied such that when the detergent dispenser (43) is mounted in the holding space (30), in order to provide light said display element is coupled optically, in at least one second displacement position that differs from the first displacement position of the detergent dispenser (43), to the light source (44, 56, 57, 58).

11. Washing machine (41) according to claim 10, **characterised in that** the second passive display element (49) has a display that can be distinguished from the first display element (1).

12. Washing machine (41) according to claim 9 to 11, **characterised in that** the first passive display element (1) and/or the second passive display element (49) has at least one optical fibre (21, 53, 54, 55) for coupling to the light source (44, 56, 57, 58).

13. Washing machine (41) according to claim 9 to 12, **characterised in that** the first passive display element (1) and/or the second passive display element (49) is moulded onto the detergent dispenser (43).

14. Washing machine (41) according to claim 9 to 12, **characterised in that** the first passive display element (1) and/or the second passive display element (49) is removably fixed onto the displaceably-mounted detergent dispenser (43).

15. Washing machine (41) according to claim 14, **characterised in that** the first passive display element (1) and/or the second passive display element (49) is a light module with a housing (2).

## Revendications

1. Appareil électroménager (41) comprenant un ensemble fonctionnel destiné à être monté de manière mobile dans un espace de logement (30) de l'appareil électroménager (41), ledit ensemble fonctionnel sortant ou rentrant en traversant une ouverture de logement (31), où l'ensemble fonctionnel (43) est un élément à tiroir ou une porte ou un couvercle ou un volet de l'appareil électroménager (41), **caractérisé en ce que** l'ensemble fonctionnel (43) présente au moins un premier élément d'affichage passif (1) qui est conçu de manière telle, que dans au moins une première position de mouvement de l'ensemble fonctionnel (43) monté dans l'espace de logement (30), ledit premier élément d'affichage soit couplé optiquement, pour l'alimentation en lumière, à une source de lumière (44, 56, 57, 58) placée dans l'espace de logement (30), et **en ce que** l'ensemble fonctionnel (43) présente un second élément d'affichage passif (49) qui est conçu de manière telle, que dans au moins une seconde position de mouvement - différente de la première - de l'ensemble fonctionnel (43) monté dans l'espace de logement (30), ledit second élément d'affichage soit couplé optiquement, pour l'alimentation en lumière, à la source de lumière (44, 56, 57, 58).

2. Appareil électroménager (41) selon la revendication 1, **caractérisé en ce que** le second élément d'affichage passif (49) présente un affichage différenciable par rapport à celui du premier élément d'affichage (1).

3. Appareil électroménager (41) selon la revendication 1 ou 2, **caractérisé en ce que** le premier élément d'affichage passif (1) et/ou le second élément d'affichage passif (49) présente au moins un guide de lumière (21, 53, 54, 55) servant au couplage à la source de lumière (44, 56, 57, 58).

4. Appareil électroménager (41) selon l'une quelconque des revendications 1 à 3, **caractérisé,en ce que** le premier élément d'affichage passif (1) et/ou le second élément d'affichage passif (49) est moulé sur l'ensemble fonctionnel (43).

5. Appareil électroménager (41) selon l'une quelconque des revendications 1 à 3, **caractérisé en ce que** le premier élément d'affichage passif (1) et/ou le second élément d'affichage passif (49) est fixé de façon amovible sur l'ensemble fonctionnel (43) monté de manière mobile.

6. Appareil électroménager (41) selon la revendication 5, **caractérisé en ce que** le premier élément d'affichage passif (1) et/ou le second élément d'affichage passif (49) est un module lumineux équipé d'un boîter (2).

7. Appareil électroménager (41) selon la revendication 6, **caractérisé en ce que** l'appareil électroménager (41) est un lave-linge.

8. Appareil électroménager (41) selon la revendication 7, **caractérisé en ce que** l'ensemble fonctionnel (43) monté de manière mobile est un bac distributeur de produit lessiviel.

9. Lave-linge (41) équipé d'un bac distributeur de produit lessiviel (43) destiné à être monté de manière mobile dans un espace de logement (30) du lave-linge (41), ledit bac distributeur sortant ou rentrant en traversant une ouverture de logement (31),
**caractérisé en ce que** le bac distributeur de produit lessiviel (43) présente au moins un premier élément d'affichage passif (1) qui est conçu de manière telle, que dans au moins une première position de mouvement du bac distributeur de produit lessiviel (43) monté dans l'espace de logement (30), ledit premier élément d'affichage soit couplé optiquement, pour l'alimentation en lumière, à une source de lumière (44, 56, 57, 58) placée dans l'espace de logement (30).

10. Lave-linge (41) selon la revendication 9, **caractérisé en ce que** le bac distributeur de produit lessiviel (43) présente un second élément d'affichage passif (49) qui est conçu de manière telle, que dans le cas du bac distributeur de produit lessiviel (43) monté dans l'espace de logement (30), ledit second élément d'affichage, dans au moins une seconde position de mouvement - différente de la première - du bac distributeur de produit lessiviel (43), soit couplé optiquement, pour l'alimentation en lumière, à la source de lumière (44, 56, 57, 58).

11. Lave-linge (41) selon la revendication 10, **caractérisé en ce que** le second élément d'affichage passif (49) présente un affichage différenciable par rapport à celui du premier élément d'affichage (1).

12. Lave-linge (41) selon l'une quelconque des revendications 9 à 11, **caractérisé en ce que** le premier élément d'affichage passif (1) et/ou le second élément d'affichage passif (49) présente au moins un guide de lumière (21, 53, 54, 55) servant au couplage à la source de lumière (44, 56, 57, 58).

13. Lave-linge (41) selon l'une quelconque des revendications 9 à 12, **caractérisé en ce que** le premier élément d'affichage passif (1) et/ou le second élément d'affichage passif (49) est moulé sur le bac distributeur de produit lessiviel (43).

14. Lave-linge (41) selon l'une quelconque des revendications 9 à 12, **caractérisé en ce que** le premier élément d'affichage passif (1) et/ou le second élément d'affichage passif (49) est fixé de façon amovible sur le bac distributeur de produit lessiviel (43) monté de manière mobile.

15. Lave-linge (41) selon la revendication 14, **caractérisé en ce que** le premier élément d'affichage passif (1) et/ou le second élément d'affichage passif (49) est un module lumineux équipé d'un boîtier (2).
